Europäisches Patentamt

European Patent Office

Office européen des brevets

(19)

(11) Veröffentlichungsnummer: **0 048 972**
A2

(12) # EUROPÄISCHE PATENTANMELDUNG

(21) Anmeldenummer: 81107625.6

(22) Anmeldetag: 24.09.81

(51) Int. Cl.³: **G 06 F 11/16**

(30) Priorität: 30.09.80 DE 3036856

(43) Veröffentlichungstag der Anmeldung: 07.04.82
Patentblatt 82/14

(84) Benannte Vertragsstaaten: **AT BE CH FR GB IT LI NL SE**

(71) Anmelder: **COMPUTER GESELLSCHAFT KONSTANZ
MBH, Max-Strohmeyer-Strasse 116, D-7750 Konstanz
(DE)**

(72) Erfinder: **Voigt, Heinz, Paul-Gerhardt-Weg 9,
D-7750 Konstanz (DE)**

(74) Vertreter: **Mehl, Ernst, Dipl.-Ing. et al, Postfach 22 01 76,
D-8000 München 22 (DE)**

(54) Datenverarbeitungsanlage mit zwei Verarbeitungseinheiten.

(57) Die erste der beiden eingangsseitig auf einem gemeinsamen Datenbus (I-BUS) liegenden Verarbeitungseinheiten (V, V2) ist ausgangsseitig über ein erstes Freigabesignal (VOE) direkt auf den Datenbus (I-BUS) schaltbar, während der Ausgang (V2Y) der zweiten Verarbeitungseinheit (V2) mit einer Treiberstufe (TS) verbunden ist. Diese Treiberstufe ist mittels eines zweiten Freigabesignals (V2OE) in der Weise steuerbar, dass die Ausgänge (V2Y) der zweiten Verarbeitungseinheit (V2) halbwortvertauscht auf den Datenbus (I-BUS) schaltbar sind. Ferner ist eine den beiden Verarbeitungseinheiten zugeordnete Vergleicherstufe (VG) mit einer Auswerteschaltung (AW) verbunden, die, gesteuert durch das erste Freigabesignal (VOE) der ersten Verarbeitungseinheit (VE), das Ausgangssignal (VERGL) der Vergleicherstufe (VG) in der Weise auswertet, dass nur bei Aufschaltung der ersten Verarbeitungseinheit (V) auf den Datenbus (IBUS) ein Fehlersignal (VERR) entstehen kann.

0048972

Computer Gesellschaft
Konstanz mbH
Max-Stromeyer-Str. 116
7750 Konstanz

Unser Zeichen

VPA   80 P 8 0 5 2 E

Datenverarbeitungsanlage mit zwei Verarbeitungseinheiten

Die Erfindung bezieht sich auf eine Datenverarbeitungsanlage nach dem Oberbegriff des Hauptanspruchs.

In bekannten Datenverarbeitungsanlagen wird der Datenverkehr zwischen den einzelnen Schaltwerken in bezug auf eine fehlerfreie Übertragung beispielsweise dadurch überwacht, daß jeweils einer Bitgruppe (Byte) ein Prüf- bzw. Paritätsbit in geeigneter Weise hinzugefügt und nach dem Transport der Daten durch die Schaltwerke eine Paritätsprüfung durchgeführt wird.

Eine derartige Paritätsprüfung ist jedoch dann nicht mehr durchführbar, wenn in einer Verarbeitungseinheit eine Verknüpfung von Daten stattgefunden hat. Hier besteht nur die Möglichkeit, durch einen Doppelaufbau der Verarbeitungseinheit eine ausreichende Fehlersicherheit zu gewährleisten. Wegen des großen schaltungstechnischen Aufwandes wurde jedoch meist darauf verzichtet und stattdessen eine entsprechende Lücke in der hardwaremäßigen Datenüberwachung in Kauf genommen.

Mit dem Bit-Scheiben-Mikroprozessor steht nun ein Baustein zur Verfügung, der es vom Aufwand her rechtfertigt, Verarbeitungseinheiten doppelt aufzubauen, so daß durch Parallelarbeit und Ergebnisvergleich die Funktion der Einrichtung in einfacher Weise überwacht werden kann.

Der vorliegenden Erfindung liegt nun die Aufgabe zugrunde, eine Datenverarbeitungsanlage mit zweifach ausgebildeter Verarbeitungseinheit in der Weise zu verbessern,

Sta 1 Stl / 16.09.80

0048972
80 P 2052 E

daß die zweite Verarbeitungseinheit über ihre eigentliche Funktion als Kontrolleinheit hinaus möglichst effektiv genutzt werden kann.

Die Lösung dieser Aufgabe ergibt sich erfindungsgemäß aus den kennzeichnenden Merkmalen des Hauptanspruchs.

Vorteilhafte Weiterbildungen der Erfindung sind in den Unteransprüchen angegeben. Im folgenden wird ein Ausführungsbeispiel der Erfindung anhand der Zeichnung näher erläutert. Dabei zeigen:

FIG 1    das Prinzipschaltbild eines Bit-Scheiben-Mikroprozessors

FIG 2    den prinzipiellen Aufbau einer aus mehreren Bit-Scheiben Mikroprozessoren gemäß FIG 1 zusammengesetzten Verarbeitungseinheit

FIG 3    einen erfindungsgemäßen Doppelaufbau einer Verarbeitungseinheit

FIG 4    eine erfindungsgemäße Ausgestaltung der Anordnung gemäß FIG 3 zur Erzeugung eines Korrekturmusters für Dezimalarithmetik.

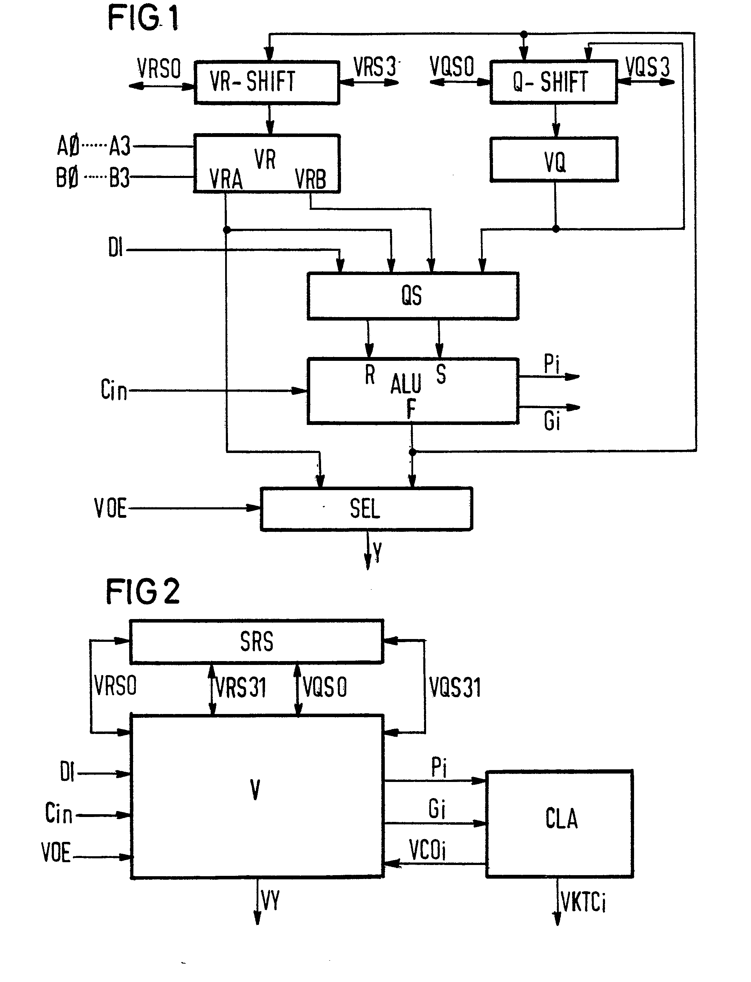

Der in FIG 1 dargestellte Bit-Scheiben-Mikroprozessor zur Verarbeitung von 4 Bit-Operanden enthält ein Rechenwerk ALU, welches die beiden Eingangsoperanden R und S verknüpft und am Ausgang F das Ergebnis liefert. Das Rechenwerk ALU liefert ferner die Auswertung der Eingangsoperanden für Übertragsdurchschaltung Pi und Übertragsbildung Gi. Cin ist der Übertragseingang in das Rechenwerk ALU (niederwertigste Stelle). Der Mikroprozessor enthält ferner einen Speicher VR mit wahlfreiem Zugriff

0048972

in welchem z.B. 16 Worte gespeichert werden können. Aus diesem Speicher VR sind mittels der Adresse A∅... A3 und B∅...3 jeweils zwei verschiedene Worte gleichzeitig auslesbar. Eingeschrieben wird in die durch die Adresse B adressierte Zelle. Der Mikroprozessor enthält ferner ein Q-Register VQ, das ausgangsseitig zusammen mit den Speichersignalen VRA, VRB und einem Direkteingang DI mit je einem Eingang eines Quellenselektors QS verbunden ist. Dieser Quellenselektor QS wiederum liefert die beiden Eingangsoperanden R und S des Rechenwerks ALU. Der Ausgang F des Rechenwerks ALU und das Speicherausgangssignal VRA bilden die beiden Eingangssignale eines durch ein Freigabesignal VOE gesteuerten Selektors SEL, der seinerseits das Ausgangssignal Y des Mikroprozessors liefert. Dem Speicher VR und dem Q-Register VQ sind jeweils SHIFT-Multiplexeinrichtungen VR-SHIFT und Q-SHIFT zugeordnet, durch welche die Eingangsdaten des Speichers VR und des Q-Registers nach rechts bzw. links verschoben werden können.

Die FIG 2 zeigt den prinzipiellen Aufbau einer aus 8 Bit-Scheiben-Mikroprozessoren gemäß FIG 1 zusammengesetzten Verarbeitungseinheit V zur Verarbeitung von 32-Bit-Operanden (Bit 00...31). Zur Erweiterung der SHIFT-Möglichkeiten (Kreisshift; Doppelwortshift aus Speicher VR und Q-Register VQ) dient eine SHIFT-Rand-Steuerung SRS. Jeder Mikroprozessor liefert für seine Tetrade die Auswertung für die Übertragsdurchschaltung Pi und den entstehenden Übertrag Gi an eine Übertrag-Vorausberechnungs-(look ahead)-Schaltung CLA, in der die Übertrags-Eingangs-Bits VCOi für die nächste Tetrade generiert werden. Cin ist der befehlsgesteuerte Übertragseingang in die niederwertigste Stelle des Rechenwerks ALU. Die Übertrag-Vorausberechnungs-Schaltung CLA liefert ferner eine Auswertung über diejenigen Tetraden, in denen "Kein-Tetraden-Übertrag" VKTCi aufgetreten ist.

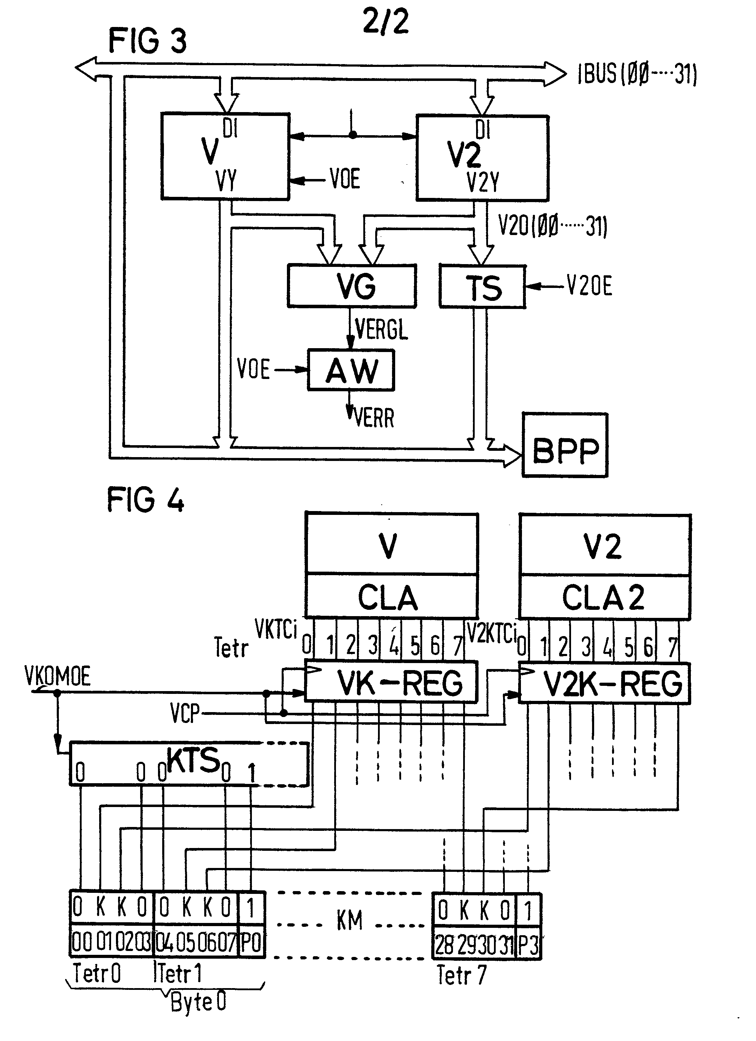

Die FIG 3 zeigt einen Ausschnitt einer Datenverarbeitungsanlage, die neben einer ersten Verarbeitungseinheit V eine zweite, identisch aufgebaute Verarbeitungseinheit V2 als Kontroll- bzw. Vergleichseinheit aufweist. Beide Verarbeitungseinheiten V und V2 arbeiten im Parallelbetrieb und erhalten ihre Eingangsdaten über den Dateneingang DI von einem internen Datenbus IBUS, über den weitere Schaltwerke des Prozessors verkehren und der über einen Transceiver mit einem externen Datenbus verbunden ist. Der interne Datenbus IBUS ist paritätsüberwacht; d.h. jeweils 8 Bits (Byte) ist ein Paritätsbit zugeordnet, mit dem zu einem geeigneten Zeitpunkt bei jedem Datenverkehr die Byteparität überprüft wird. Der Ausgang VY der ersten Verarbeitungseinheit V ist über ein von einer Bus-Verwaltung erzeugtes Freigabesignal VOE auf den Datenbus IBUS aufschaltbar, und zwar jeweils dann, wenn die Verarbeitungseinheit V Daten auf den Datenbus IBUS senden soll. In diesem Fall werden die Paritätsbits aus den auf dem Datenbus IBUS anstehenden Ausgangsdaten generiert, so daß die Byte-Paritätsprüfeinrichtung BPP keinen Fehler feststellt. Die zweite Verarbeitungseinheit V2 ist dauernd freigeschaltet und bietet ihre Ausgangsdaten V20 einerseits den Eingängen einer Bus-Treiberstufe TS und andererseits einer Vergleicherstufe VG an. Der zweite Eingang dieser Vergleicherstufe VG ist mit dem Datenbus IBUS verbunden. Das Ausgangssignal VERGL der Vergleicherstufe VG wird schließlich in einer Auswerteschaltung AW in der Weise ausgewertet, daß nur dann ein Fehlersignal VERR entstehen kann, wenn die erste Verarbeitungseinheit V, gesteuert durch das Freigabesignal VOE, Daten auf den Datenbus IBUS sendet. Damit wird erreicht, daß Fehlfunktionen der beiden Verarbeitungseinheiten erkannt und gemeldet werden, wobei die Fehlererkennung, bedingt durch den Parallelbetrieb, ohne Zeitverlust arbeitet. Außerdem werden die durch die erste Verarbeitungseinheit V auf den Datenbus IBUS gesendeten Daten mit gültigen Paritätsbits versehen.

Die der Treiberstufe TS zugeführten Ausgangssignale V20 der zweiten Verarbeitungseinheit V2 sind, gesteuert durch ein Freigabesignal V20E halbwortvertauscht auf den Datenbus IBUS aufschaltbar. Dadurch ist die Möglichkeit eines Halbwort-SHIFT aus der zweiten Verarbeitungseinheit V2 gegeben. Die beiden Freigabesignale VOE und V20E können für das erste bzw. zweite Halbwort aus der ersten bzw. zweiten Verarbeitungseinheit V bzw. V2 mit Hilfe jeweils zugeordneter Befehlscodes ZUF1 bzw. ZUF2 erzeugt werden. Durch eine Adressenmodifikation der Adresse A für die zweite Verarbeitungseinheit V2 kann nun bewirkt werden, daß die auf den Datenbus geschalteten Datenworte aus Halbwörtern gebildet werden, die aus unterschiedlichen VR-Speicher-Zellen der ersten und der zweiten Verarbeitungseinheit stammen. Dies wird z.B. dadurch erreicht, daß, gesteuert durch einen Befehlscode ZUF, in der zweiten Verarbeitungseinheit das niederwertigste Adreßbit A3 auf "1" gesetzt wird. Dadurch wird, bei geradzahliger Adresse A, aus der ersten Verarbeitungseinheit V die adressierte Zelle und aus der zweiten Verarbeitungseinheit V2 die Zelle A+1 gelesen. Die verschiedenen Möglichkeiten der Datenbus-Beschaltung aus den beiden Verarbeitungseinheiten V und V2 sind in der nachstehenden Tabelle dargestellt.

0048972

| IBUS | | | |
|---|---|---|---|
| 00.. | ..15 | 16.. | ..31 |
| V | | V | |
| 00.. | ..15 | 16.. | ..31 | V sendet |
| V2 | | V2 | |
| 16.. | ..31 | 00.. | ..15 | V2 sendet |
| V | | V2 | |
| 00.. | ..15 | 00.. | ..15 | ZUF 1 |
| V2 | | V | |
| 16.. | ..31 | 16.. | ..31 | ZUF 2 |

In den Fällen, in denen die zweite Verarbeitungseinheit V2 sendet oder einer der beiden Befehlscodes ZUF1 bzw. ZUF2 wirksam wird, ist wegen der möglichen Adreßmodifikation eine Auswertung des Ausgangssignales VERGL der Vergleicherstufe VG nicht möglich.

Wie bereits erwähnt, ist aufgrund der Existenz einer zweiten Verarbeitungseinheit einerseits ein Halbwortshift durchführbar und andererseits über die beiden Befehlscodes ZUF1, 2 die Möglichkeit gegeben, jeweils zwei aus verschiedenen VR-Speicher-Zellen stammende Halbworte zu einem Datenwort zusammenzusetzen. Halbwortshift und Zusammensetzfunktion spielen z.B. bei der Abhandlung von Unterbrechungen eine maßgebliche Rolle. Dabei können nämlich Unterprogramm-Rücksprungadressen (16 Bit) zeitsparend zu Worten (32 Bit) zusammengesetzt und platzsparend im Registerspeicher abgespeichert werden. Nach Abhandlung der Unterbrechung werden dann diese Adressen durch Halbwortshift wieder ausgerichtet und zurücktransportiert.

Verarbeitungseinheiten sind üblicherweise für die Verarbeitung von Dualzahlen eingerichtet. Um auch Dezimalzahlen verarbeiten zu können, müssen diese zunächst in eine Binärzahl umgewandelt werden, wobei für jede Dezimalziffer eine vierstellige Bitreihe bzw. Tetrade, z.B. mit einem 8421-BCD-Code, beansprucht wird. Ohne Berücksichtigung des Vorzeichens kann somit z.B. mit 32-Bitstellen eine 8-stellige Dezimalzahl dargestellt werden.

Aufgrund der Tatsache, daß mit einer Tetrade mehr als 10 Ziffern, nämlich insgesamt 16 Ziffern darstellbar sind, ist bei der Addition von BCD-codierten Zahlen eine Korrektur vorzunehmen, derart, daß an allen Stellen (Tetraden) eines ersten Operanden eine "6" addiert wird, damit ein eventueller Übertrag in die jeweils nächsthöhere Tetrade ermöglicht wird. Nach der Addition mit dem zweiten Operanden wird in allen Tetraden, in denen kein Übertrag aufgetreten ist, eine "6" subtrahiert.

Beispiel   (in sedezimaler Darstellung):

| | | |
|---|---|---|
| 1. Operand | 1 7 3 5 2 9 8 6 | |
| Ergänzung | + 6 6 6 6 6 6 6 6 | = 8 0 6 2 7 8 0 1 |
| 1. Zwischensumme | 7 D 9 B 8 F E C | |
| 2. Operand | + 6 3 2 7 4 8 1 5 | |
| 2. Zwischensumme | E 0 C 2 D 8 0 1 | |
| Tetradenübertrag | T   T   T T T | |
| Korrekturmuster | - 6 0 6 0 6 0 0 0 | |
| Ergebnis | 8 0 6 2 7 8 0 1 | |

Zur wirkungsvollen Unterstützung der Dezimalarithmetik dient ein sogenanntes Korrekturmuster KM das über beide Verarbeitungseinheiten V, V2 erzeugt wird und dadurch die Fehlerüberwachung unterstützt. Einzelheiten der Schaltung sind aus FIG 4 ersichtlich. Sie zeigt die beiden Verarbeitungseinheiten V und V2, denen jeweils eine Übertrag-Vorausberechnungs(look-ahead)-Schaltung CLA, CLA2 zugeordnet ist. Die dort jeweils am Ende eines Verarbeitungszyklus entstehenden invertierten Tetraden-Überträge VKTCi bzw. V2KTCi werden mit dem Takt VCP der Verarbeitungseinheit in je ein zugehöriges Tetraden-Übertrags-Register VK-REG, V2K-REG übernommen. Wird z.B. eine Dezimalzahl durch die Verarbeitungseinheit unverändert transportiert, dann entstehen auch keine Tetradenüberträge. In diesem Fall wird dann in allen Stellen der beiden Tetraden-Übertrags-Register VK-REG, V2K-REG eine "1" gespeichert. Die Inhalte der beiden Tetraden-Übertrags-Register VK-REG und V2K-REG können nun, gesteuert durch ein Freigabesignal VKOMOE auf den Datenbus geschaltet und über den Direkteingang der Verarbeitungseinheit V, V2 als Operanden verwendet werden. Zu diesem Zweck ist das sogenannte Korrekturmuster KM vorgesehen, das mit den beiden Tetraden-Übertrags-Registern VK-REG, V2K-REG sowie einer, ebenfalls vom Freigabesignal VKOMOE gesteuerten Korrektur-Treiberstufe KTS in der Weise verknüpft ist, daß, wie am Byte 0 dargestellt, die beiden Tetraden Tetr 1, Tetr 2 in der jeweils höchst- und niederwertigen Bitstelle jeweils eine Null aus der Korrektur-Treiberstufe KTS und in den übrigen Bitstellen den jeweiligen Tetradenübertrag VKTCi, V2KTCi aus den beiden Tetraden-Registern VK-REG, V2K-REG aufnehmen. Jede Tetrade hat dann entweder den Wert "6" oder den Wert "0". Nach jedem Byte wird ebenfalls über die Korrektur-Treiberstufe KTS ein Paritätsbit P0...3 gesetzt, das z.B. durch eine "1" dargestellt wird, falls im Prozessor eine Paritätsergänzung auf "Ungerade" vereinbart ist. Für Dezimalarithmetik wird somit auf einfache und schnelle Weise sowohl die erforderliche Ergänzungskorrektur - Addition einer "6" in allen Tetraden - als auch das Korrekturmuster erzeugt. Da außerdem das Korrekturmuster in allen Tetraden aus den Rechenergebnissen beider Verarbeitungseinheiten zusammengesetzt wird und dabei immer geradzahlig sein muß, werden Fehler durch die Paritätsüberwachung auf dem Datenbus erkannt. Insgesamt ist damit ein Überwachungs-

0048972
80 P 8052 E

system für das richtige Funktionieren der beiden Verarbeitungseinheiten V und V2, der zugehörigen Übertrag-Vorausberechnungs-Schaltungen und der Aufschaltung des Korrekturmusters auf den Datenbus geschaffen.

4 Patentansprüche
4 Figuren

## Patentansprüche

1. Datenverarbeitungsanlage für BCD-codierte Daten, mit zwei eingangsseitig an einem gemeinsamen Datenbus liegenden Verarbeitungseinheiten, deren Ausgänge über eine Vergleicherstufe miteinander verknüpft sind, d a d u r c h g e k e n n z e i c h n e t , daß der Ausgang (VY) der ersten Verarbeitungseinheit (V) über ein erstes Freigabesignal (VOE) auf den Datenbus (IBUS) schaltbar ist, daß der Ausgang der zweiten Verarbeitungseinheit (V2) mit einer Treiberstufe (TS) verbunden ist und daß die den beiden Verarbeitungseinheiten (V, V2) zugeordnete Vergleicherstufe (VG) mit einer Auswerteschaltung (AW) verbunden ist, die, gesteuert durch das erste Freigabesignal (VOE) der ersten Verarbeitungseinheit (VE), das Ausgangssignal (VERGL) der Vergleicherstufe (VG) in der Weise auswertet, daß nur bei Aufschaltung der ersten Verarbeitungseinheit (V) auf den Datenbus (IBUS) ein Fehlersignal (VERR) entstehen kann.

2. Datenverarbeitungsanlage nach Anspruch 1, d a - d u r c h g e k e n n z e i c h n e t , daß die Treiberstufe (TS) mittels eines zweiten Freigabesignals (V2OE) in der Weise steuerbar ist, daß die Ausgänge (V2Y) der zweiten Verarbeitungseinheit (V2) halbwortvertauscht auf den Datenbus (IBUS) schaltbar sind.

3. Datenverarbeitungsanlage nach Anspruch 2, d a - d u r c h g e k e n n z e i c h n e t , daß die Ausgänge (VY, V2Y) der beiden Verarbeitungseinheiten (V, V2) durch die zugehörigen Freigabesignale (VOE, V2OE) in der Weise steuerbar sind, daß aus beiden Verarbeitungseinheiten (V, V2) jeweils ein Halbwort aus unterschiedlichen internen Speicherzellen der Verarbeitungseinheiten (V, V2) auf den Datenbus (IBUS) schaltbar ist.

4. Datenverarbeitungsanlage nach einem der vorhergehenden Ansprüche, d a d u r c h  g e k e n n -
z e i c h n e t , daß jede Verarbeitungseinheit (V, V2) je ein Tetraden-Übertrags-Register (VK-REG, V2K-REG) zur Aufnahme invertierter Tetraden-Überträge (VKTCi, V2KTCi) aufweist, daß die beiden Tetraden-Übertrags-Register (VK-REG-V2K-REG) sowie eine Korrektur-Treiberstufe (KTS) zu einem Korrekturmuster in der Weise verknüpft sind, daß die einzelnen Tetraden des Korrekturmusters (KM) in der höchst- und niederwertigen Bitstelle jeweils eine Null aus der Korrektur-Treiberstufe (KTS) und in den beiden übrigen Bitstellen den jeweiligen Tetraden-Übertrag (VKTCi, V2KTCi) aus den beiden Tetraden-Registern (VK-REG, V2K-REG) aufnehmen und ferner nach jeweils zwei derart gebildeten Tetraden (Tetr 0, Tetr 1) ein Paritätsbit (PO) aus der Korrektur-Treiberstufe (KTS) eingesetzt wird.

0048972

1/2

FIG. 1

FIG. 2

FIG 3

FIG 4